# EUROPEAN PATENT SPECIFICATION

(11) **EP 3 589 025 B1**
(45) Date of publication and mention of the grant of the patent: **30.06.2021**
(21) Application number: 17906375.5
(22) Date of filing: 19.04.2017
(51) Int. Cl.: H04W 48/08, H04W 74/08, H04W 48/16, H04W 88/02, H04W 88/08

(54) **METHOD FOR CONTROLLING NETWORK ACCESS, USER EQUIPMENT AND BASE STATION**
VERFAHREN ZUR STEUERUNG VON NETZWERKZUGANG, BENUTZERGERÄT UND BASISSTATION
PROCÉDÉ DE COMMANDE D'ACCÈS AU RÉSEAU, ÉQUIPEMENT UTILISATEUR ET STATION DE BASE

(43) Date of publication of application: 01.01.2020
(73) Proprietor: Beijing Xiaomi Mobile Software Co., Ltd., Beijing 100085 (CN)
(72) Inventor: JIANG, Xiaowei, Beijing 100085 (CN)
(74) Representative: Gevers Patents
(86) International application number: PCT/CN2017/081051
(87) International publication number: WO 2018/191880

(56) References cited:
- EP-A1- 2 827 674
- EP-A2- 2 114 102
- CN-A- 101 212 371
- CN-A- 102 761 933
- CN-A- 104 322 108
- ERICSSON: "Access Control for NR", 3GPP DRAFT; R2-1702865 ACCESS CONTROL FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051244845, Retrieved from the Internet: URL:http://www.3gpp.org/ftp/Meetings_3GPP_ SYNC/RAN2/Docs/ [retrieved on 2017-04-03]
- TELECOM ITALIA ET AL: "Corrections and alignment with core specifications. Upgrade to the "Release independent" status and creation of the Rel-6", 3GPP DRAFT; R2-040679-REL6-CR31, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Malaga, Spain; 20040226, 26 February 2004 (2004-02-26), XP050125610, [retrieved on 2004-02-26]
- "3 Generation Partnership Project; Technical Specification Group Radio Access Network; User Equipment (UE) procedures in idle mode and procedures for cell reselection in connected mode (Release 14)", 3GPP STANDARD ; TECHNICAL SPECIFICATION ; 3GPP TS 25.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG6, no. V14.0.0, 23 March 2017 (2017-03-23), pages 1-58, XP051291380, [retrieved on 2017-03-23]

## Description

### TECHNICAL FIELD

The subject disclosure relates to the field of communication technology, and in particular to a method for controlling network access, User Equipment (UE), and a base station.

### BACKGROUND

Along with development of radio communication technology, a mobile communication network gradually evolves toward a 5th-Generation (5G) network. A 5G network allows access by a massive number of User Equipment (UE) of different types, and bears a massive number of service types.

In related art, a Long Term Evolution (LTE) system controls network access by UE based on category. In related art, when UE is paged to access a network, the UE may be notified, in a paging message, of no reason for the paging, or but a specific reason for the paging, such as paging triggered by a voice service. When the UE is to request random access to the network of a cell, the UE cannot determine whether access to a target cell is restricted. This impacts efficiency in random access of the network by the UE.

ERICSSON: "Access Control for NR", 3GPP DRAFT; R2-1702865 seems to disclose unified / generalized New Radio access control with a single set of access categories used by UE to perform barring check, where core network configures access control categories for UE using Non-Access Stratum signaling; UE determines access control category; Radio Access Network indicates access control barring, i.e., whether an access category is barred or not; UE performs barring check and then attempts access if its category is not barred.

EP 2 114 102 A2 seems to disclose cell reselection in a mobile communication system, where UE reads Access Class (AC) barring parameters of the serving cell broadcast by a base station (BS), and performs AC barring check; UE calculates cell reselection values of the serving cell and the adjacent cells according to cell reselection parameters broadcast by the BS when AC barring check fails; the UE ranks calculated cell reselection values, and selects a cell corresponding to the maximum value of the calculated cell reselection values as the serving cell.

### SUMMARY

To solve one or more problems in related art, embodiments herein provide methods for controlling network access, as well as a corresponding User Equipment (UE)-and base station, capable of reducing time spent in detecting access control by UE.

The features of the methods and devices are defined in the independent claims, and the preferable features are defined in the dependent claims. The following aspects are provided for illustrative purposes.

According to a first aspect, a method for controlling network access may be applied to User Equipment (UE). The method may include:
determining a category of access by the UE according to a paging message sent by a base station;
acquiring a result of matching access control information of a target cell to the category of access by the UE; and
in response to the result indicating that the UE may be allowed to access the target cell, initiating a request for random access to the target cell.

The access control information may include an access control parameter configured for a category.

According to a second aspect , a method for controlling network access may be applied to a base station. The method may include:
determining, according to a preset paging trigger, a category to be used by User Equipment (UE) in accessing a network;
loading the category into a paging message;
sending the paging message to the UE; and
broadcasting access control information of a target cell to the UE, such that the UE matches the access control information to the category and determines whether the UE may be allowed to access the target cell.

The access control information may include an access control parameter configured for a category.

According to a third aspect , an apparatus for controlling network access may include a processor and memory.

The memory may be arranged for storing instructions executable by the processor.

The processor may be arranged for:
determining a category of access by User Equipment (UE) according to a paging message sent by a base station;
acquiring a result of matching access control information of a target cell to the category of access by the UE; and
in response to the result indicating that the UE may be allowed to access the target cell, initiating a request for random access to the target cell.

The access control information may include an access control parameter configured for a category.

According to a fourth aspect , an apparatus for controlling network access may include a processor and memory.

The memory may be arranged for storing instructions executable by the processor.

The processor may be arranged for:
determining, according to a preset paging trigger, a category to be used by User Equipment (UE) in accessing a network;
loading the category into a paging message;
sending the paging message to the UE; and
broadcasting access control information of a target cell to the UE, such that the UE matches the access control information to the category and determines whether the UE may be allowed to access the target cell.

The access control information may include an access control parameter configured for a category.

A technical solution according to an embodiment herein may have advantages as follows.

With the method for controlling network access according to at least one embodiment herein, when being paged to access a network, UE may first determine an access category per se according to a category included in a paging message; thus match access control information of a cell configured based on a category to the access category designated to the UE by a base station, to rapidly determine whether the UE is allowed to access the cell, thereby improving efficiency in random network access by the UE.

A base station may page UE for various reasons. Not every paging message is loaded with category information. Having received a paging message, UE may first determine whether the paging message contains category information. If so, the UE may determine that it is to access a network randomly. The UE may then perform, according to the category information in the paging message, a matching process for controlling access to a target cell, improving efficiency in network access.

Depending on why paging is triggered, a base station may load a category into a paging message to be sent to UE as follows. A numerical value of the entire category may be loaded into the paging message. A sequence number of a valid field in the category and a field value of the valid field may be loaded into the paging message. A mask and a field value of a valid field identified by the mask may be loaded into the paging message. Therefore, a signaling overhead brought by sending a category to UE is effectively reduced.

After UE has determined a category according to a paging message, if the UE stores no access control information of a target cell, or stores invalid or expired access control information, the UE may first receive access control information of the target cell broadcast by a base station, and then perform matching for access control, thereby improving accuracy in access control.

A base station may broadcast, to UE, information on a resource for random access configured for a category. If the information includes information on a resource for random access configured for a designated category, the UE may rapidly access a network using the designated resource for random access, improving efficiency in random network access by the UE.

The general description above and the elaboration below are exemplary and explanatory only, and the scope of protection is defined in the claims.

### BRIEF DESCRIPTION OF DRAWINGS

A drawing here is incorporated in the subject disclosure, constitutes part of the subject disclosure, illustrates at least one embodiment according to the subject disclosure, and together with the subject disclosure, serves to explain the principle of the subject disclosure.
FIG. 1 is a flowchart of a method for controlling network access according to an example herein.
FIG. 2 is a flowchart of a method for controlling network access according to an example herein.
FIG. 3-1 is a diagram of a structure of a category according to an example herein.
FIG. 3-2 is a diagram of a category according to an example herein.
FIG. 4 is a flowchart of a method for controlling network access according to an example herein.
FIG. 5 is a flowchart of a method for controlling network access according to an example herein.
FIG. 6 is a flowchart of a method for controlling network access according to an example herein.
FIG. 7 is a flowchart of a method for controlling network access according to an example herein.
FIG. 8 is a flowchart of a method for controlling network access according to an example herein.
FIG. 9 is a block diagram of an apparatus for controlling network access according to an example herein.
FIG. 10 is a block diagram of an apparatus for controlling network access according to an example herein.
FIG. 11 is a block diagram of an apparatus for controlling network access according to an example herein.
FIG. 12 is a block diagram of an apparatus for controlling network access according to an example herein.
FIG. 13 is a block diagram of an apparatus for controlling network access according to an example herein.
FIG. 14 is a block diagram of an apparatus for controlling network access according to an example herein.
FIG. 15 is a block diagram of an apparatus for controlling network access according to an example herein.
FIG. 16 is a block diagram of an apparatus for controlling network access according to an example herein.
FIG. 17 is a diagram of a structure of an apparatus for controlling network access according to an example herein.
FIG. 18 is a diagram of a structure of an apparatus for controlling network access according to an example herein.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following examples do not represent all implementations in accordance with the subject disclosure. Rather, they are merely examples of the apparatus (i.e., device) and method in accordance with certain aspects of the subject disclosure as recited in the accompanying claims.

Terms used in the subject disclosure are for describing specific embodiments instead of limiting the subject disclosure. Singulars "a/an", "said" and "the" used in the subject disclosure and the appended claims are intended to include the plural form, unless expressly illustrated otherwise by context. The term "and/or" used in the subject disclosure refers to and includes any or all possible combinations of one or more associated items listed.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a term "if" as used herein may be interpreted as "when" or "while" or "in response to determining that".

A technical solution provided herein may be applied to a LTE system of a 5G network. An executive entity herein may include a base station, User Equipment (UE), etc. The base station may be a base station, a sub base station, etc., arranged with a large-scale array of antennae. The UE may be a user terminal, a user node, a mobile terminal, a tablet computer, or the like. A base station and UE may be independent of, yet in contact with, each other, implementing a technical solution provided herein together.

A scene of application of the subject disclosure may be as follows. A base station may send a paging message to UE in an idle state, i.e., a Radio Resource Control (RRC)-IDLE state, to page the UE to access a network, i.e., to trigger establishing an RRC connection by the UE with the base station. That is, in the subject disclosure, a request by UE to access a network of a cell may be triggered by paging of the UE by a base station. I.e., UE is called to access a network.

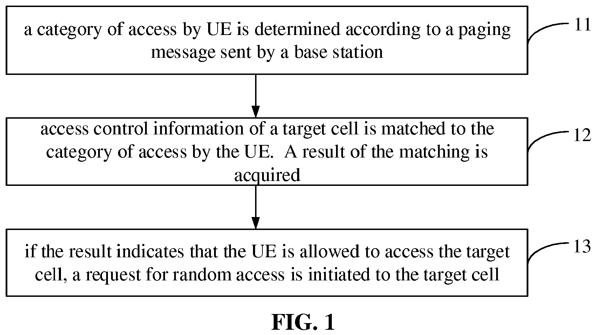

Based on the scene of application, the subject disclosure provides a method for controlling network access, which is applied to UE. FIG. 1 is a flowchart of a method for controlling network access according to an example herein. The method may include one or more options as follows.

In option 11, a category of access by UE is determined according to a paging message sent by a base station.

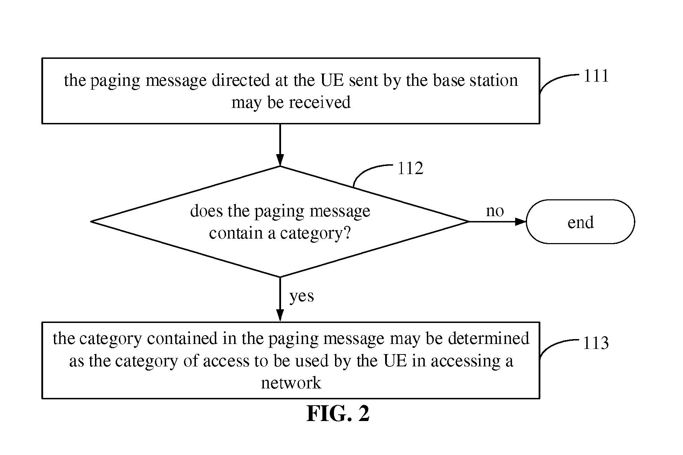

FIG. 2 is a flowchart of a method for controlling network access according to an example herein. The option 11 may include one or more options as follows.

In option 111, the paging message directed at the UE sent by the base station may be received.

UE in an RRC-IDLE state, such as UE1, may detect, according to an equipment identifier of the UE1, a paging message directed at the UE1 sent by a base station. The equipment identifier of the UE may be identifier information capable of uniquely expressing an identity of the UE, such as a System Architecture Evolution-Temporary Mobile Subscriber Identity (S-TMSI), an International Mobile Subscriber Identity (IMSI), or the like.

In option 112, it may be determined whether the paging message contains a category.

Based on why a paging message is sent, two classes of paging messages may be sent by a base station.

A paging message of a first class, such as that due to system message updating, redistribution, etc., may not require UE to access a network. A paging message of the first class may include no category information.

A paging message of a second class, such as one indicating that a network is to send data to UE in a RRC-IDLE state, may require the UE to access the network.

In case of a paging message of a second class, in the subject disclosure, to adapt to access control information (which is allocated to and or configured for a cell by a base station based on a category), while instructing UE to access a network, the base station may allocate to the UE a category to be used by the UE in accessing the network, namely a category of access (or an access category).

Access control information configured by a base station for a cell may be an access control parameter configured based on a category. A category (also called uniform category information) may be uniform information which integrates various kinds of specific category information such as an equipment type, an access level, a service type, an application, signaling information, etc.

Therefore, if option 112 yields a positive result, option 113 may be executed. Otherwise if option 112 gives a negative result, the flow may end.

In option 113, if the paging message contains a category, the category contained in the paging message may be determined as the category of access to be used by the UE in accessing a network.

For example, if UE1 detects that a paging message includes a category, such as Category 1, UE1 may determine Category 1 as the category of access to be used by UE1. Thus, UE1 may determine, according to Category 1, whether it is allowed to access a network of a target cell, before initiating a request for random access to the network.

A category, indicated to page UE such as UE1, in a paging message may be expressed as follows.

A category in a paging message may be expressed as a numerical value of the (entire) category.

If a category is a numerical value acquired according to a kind of specific category information using a preset algorithm, such as computation weighted by a weighting factor of a kind of specific category information, then Category 1 in a paging message may be a specific numerical value, or a range of numerical values.

A category in a paging message may be expressed as a sequence number of a valid field in the category and a field value of the valid field (i.e., a field value corresponding to the sequence number of the valid field).

A category may be expressed using a data structure of a preset length. The data structure may be divided into a number of distinct fields corresponding to a number of kinds of specific category information contained in the category.

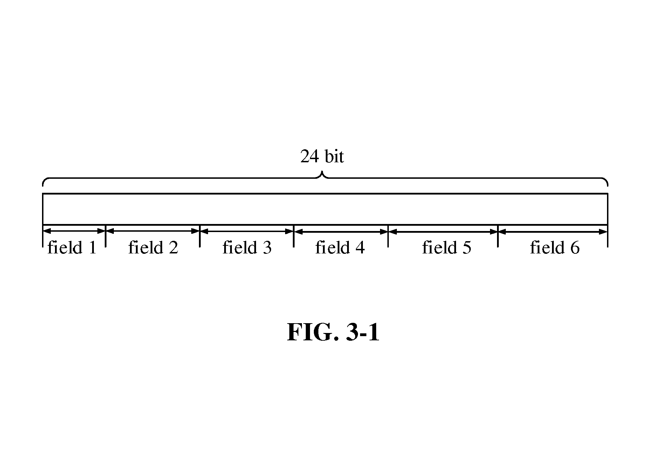

FIG. 3-1 is a diagram of a structure of a category according to an example herein. Assume that a category is expressed using a data structure of a preset length such as 24 bits. The category may integrate six kinds of specific category information. The 24-bit data structure may be divided into six fields, each representing a kind of specific category information. Each of the fields may occupy the same number of bits or different numbers of bits.

To save a signaling overhead, of multiple fields making up a category, a base station may indicate a sequence number and a field value of but a valid field.

A valid field may refer to a field of a category that includes a non-zero bit. For example, if a base station is to indicate to UE1 a Category 1 where a second field and a third field contain non-zero bits, then the base station may load into a paging message directed at UE1, sequence numbers and field values of but the second field and the third field, expressed exemplarily as (#2, field value 2) and (#3, field value 3), respectively.

A category in a paging message may be expressed as a mask and a field value of a valid field identified by the mask.

Having determined Category 1 for UE1, a base station may determine a mask according to a specific value of Category 1. By the mask, a valid field of Category 1 may be identified and a field value of the valid field may be indicated.

Category 1 or a field value of a valid field thereof may be a specific numerical value, a range of numerical values, or a combination of a specific numerical value and a range of numerical values, which is not limited in the subject disclosure.

In option 12, access control information of a target cell is matched to the category of access by the UE. A result of the matching is acquired.

The access control information of the target cell includes an access control parameter configured for a category (that is, an access control configuration parameter of a category).

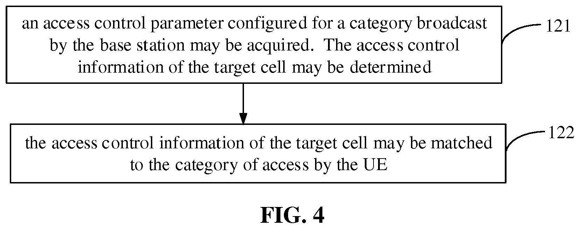

FIG. 4 is a flowchart of a method for controlling network access according to an example herein. The option 12 may include one or more options as follows.

In option 121, an access control parameter configured for a category broadcast by the base station may be acquired. The access control information of the target cell may be determined.

The access control information of the target cell may serve to determine whether UE is allowed to access the target cell. The access control information may restrict access, that is, restricting access once a control condition is met. The access control information may allow access, that is, allowing access once a control condition is met. A base station may configure access control information of a cell as needed by the cell in line with a control signaling saving principle, which is not limited in the subject disclosure.

UE may record acquired access control information of a target cell as a correspondence between a category and an access control parameter configured, in a table such as Table 1.

**Table 1**

| | |
|---|---|
| access detection information | access control parameter configured |
| category | ... |

In option 122, the access control information of the target cell may be matched to the category of access by the UE.

For example, access control information may allow access. In this case, option 122 may be implemented specifically according to how an access control parameter configured for the target cell is expressed.

An access control parameter configured for a category may be a specific numerical value.

The access control parameter configured in Table 1 may be one or more specific category values such as 1, 3, 5, etc.

Then, the matching process of option 122 may be as follows. If in option 11 a value of an access category of UE is determined as 1, it may be learned, by looking up Table 1, that UE1 is allowed to access a network of a cell.

An access control parameter configured for a category may be a range of values.

The access control parameter configured in Table 1 may be one or more ranges of values such as [0, 3], [6, 9], etc.

Still assume that the value of the access category of UE1 is 1. It may be learned, by looking up Table 1, that 1 is included in the preset range [0, 3]. Therefore, it may be determined that UE1 is allowed to access a network of a cell.

An access control parameter configured for a category may be a mask value and a parameter value of a valid bit in the mask.

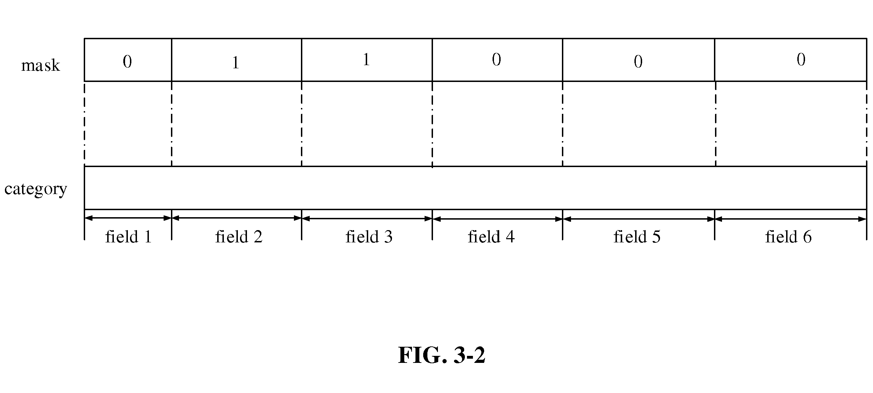

When broadcasting access control configuration of a category (i.e., access control information configured for a category), a base station may publish one or more mask values and ranges of values of a preset field. As shown in FIG. 3-2, a mask value of 1 may indicate that a field corresponding to the mask value is a valid field. Accordingly, access control information may include a parameter value of a valid field of a category identified by the mask, such as a parameter value L of the second field and a parameter value M of the third field. The L and the M may be specific numerical values, ranges of numerical values, combinations of ranges of numerical values and exclusive lists, etc.

In this case, if a mask for indicating Category 1 of access by UE1 is the same as the mask shown in FIG. 3-2 and field values of valid fields indicated by the mask belong respectively to L and M, it may mean that UE1 is allowed to access a network of a cell.

In option 13, if the result indicates that the UE is allowed to access the target cell, a request for random access is initiated to the target cell.

When the result of the matching output by The option 12 indicates that UE1 is allowed to access the target cell, UE1 may initiate a request for random access to the target cell, requesting to establish an RRC connection with the base station of the cell.

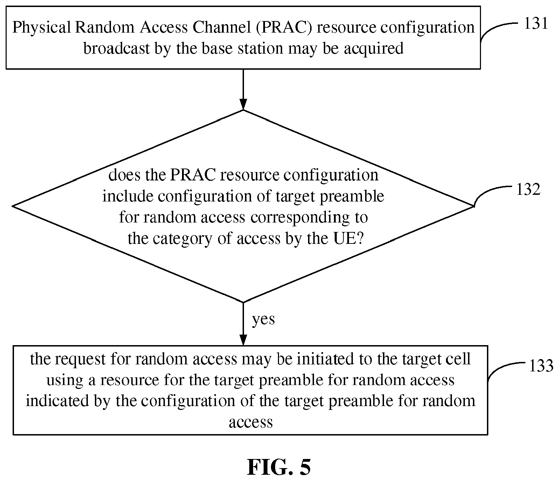

In allocating an access category to UE, a base station may also allocate a random access resource for the designated category, such that UE1 may access a network of a cell rapidly using the random access resource, improving efficiency in network access. FIG. 5 is a flowchart of a method for controlling network access according to an example herein. The option 13 may include one or more options as follows.

In option 131, Physical Random Access Channel (PRAC) resource configuration broadcast by the base station may be acquired. The PRAC resource configuration may include a correspondence between a category and configuration of preamble for random access (that is, a correspondence between uniform category information and random access preamble configuration information).

A base station may further broadcast PRAC resource configuration to a cell where UE1 is located. The PRAC resource configuration may include a correspondence between a category and configuration of preamble for random access, as shown exemplarily in Table 2.

**Table 2**

| category | configuration of preamble |
|---|---|
| Category 1 | configuration 1 |
| ... | ... |
| Category n | configuration n |

The configuration of preamble may include a number of resources, such as Resource Blocks (RB), occupied by the preamble for random access, and a time-frequency location where the preamble is sent, such as a carrier frequency bearing the preamble and a time-domain location of the RB bearing the preamble in a carrier.

In option 132, it may be determined whether the PRAC resource configuration includes configuration of target preamble corresponding to the category of access by the UE.

For example, a base station may allocate, to UE1 through a paging message, Category 1. Before UE1 prepares to access a network of a cell, if UE2 has acquired PRAC resource configuration broadcast by the base station, UE1 may look up the PRAC resource configuration as shown in Table 2, to determine whether Table 2 includes the configuration of the target preamble corresponding to Category 1. If so, option 133 may be executed.

In option 133, if the PRAC resource configuration includes the configuration of the target preamble, the request for random access may be initiated to the target cell using a resource for the target preamble indicated by the configuration of the target preamble.

Exemplarily, if UE1 has found, in the PRAC resource configuration broadcast by the base station, the configuration of the target preamble correspond to Category 1 such as configuration 1 in Table 2, the UE1 may initiate a request for random access to the network of the cell using a resource for preamble indicated by configuration 1.

UE1 may timely initiate a request for random access using a specific access resource designated by a base station through Category 1, improving efficiency in random access.

Otherwise, if PRAC resource configuration broadcast by a base station does not include configuration of target preamble corresponding to Category 1, or no PRAC resource configuration has been broadcast by a base station to a cell, UE1 may initiate a request for random access to a target cell using a shared access resource.

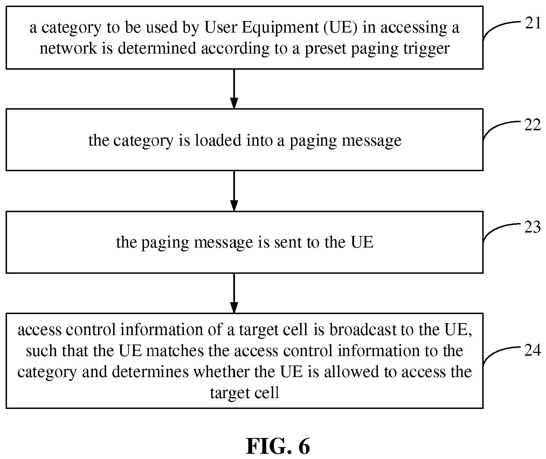

Accordingly, the subject disclosure also provides a method for controlling network access, which is applied to a base station. FIG. 6 is a flowchart of a method for controlling network access according to an example herein. The method may include one or more options as follows.

In option 21, a category to be used by User Equipment (UE) in accessing a network is determined according to a preset paging trigger.

The paging trigger may be a reason that triggers a base station to page UE to access a network, such as a preset application, a call type, an application type, a service type, signaling, or other information.

To page UE to access a network due to such a paging trigger, a base station may first generate a category according to the paging trigger, to instruct the target UE to use the category as an access type to access the network.

A base station may determine, according to a preset paging trigger, a category for paging UE in two ways as follows.

In a first way, a specific numerical value of a category may be computed using a preset algorithm according to the preset paging trigger.

In a second way, a field value of a field in a preset data structure of a category, where said field corresponds to a preset paging trigger, may be determined.

A category may be expressed using a data structure of a preset length, as elaborated in the embodiments with reference to FIG. 3-1, which is not repeated here.

In option 22, the category is loaded into a paging message.

A paging message for a base station to page UE may include not only an equipment identifier of the target UE, but also a category configured for the target UE.

A category may be loaded into a paging message In option 22 in a way depending on how a category is expressed as described.

Corresponding to the first way to express a category, if for example a target UE is UE1, and it is assumed that in option 21 a value of a category to be used by UE1 is 1, then in option 22 the specific value of the category may be loaded into the paging message, and may be recorded as a correspondence between the equipment identifier of UE1 and the value of the category.

Corresponding to the second way to express a category, a category may be expressed using a data structure of a preset length, and specific category information may be expressed using different fields.

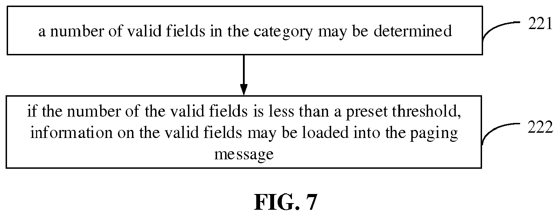

FIG. 7 is a flowchart of a method for controlling network access according to an example herein. The option 22 may include one or more options as follows.

In option 221, a number of valid fields in the category may be determined.

Exemplarily, assume that a field in a structure of a category as shown in FIG. 3-1 represents specific category information as shown in Table 3.

**Table 3**

| sequence number | Field 1 | Field 2 | Field 3 | Field 4 | Field 5 | Field 6 |
|---|---|---|---|---|---|---|
| specific category | equipment type | application type | call type | signaling | service type | access level |

If in Category 1 determined In option 21, a second field representing an application type and a third field representing a call type include non-zero bits, it may be determined that there are 2 valid fields in Category 1.

In option 222, if the number of the valid fields is less than a preset threshold, information on the valid fields may be loaded into the paging message.

Information on a valid field may include a field value of the valid field, a sequence number of the valid field, a mask for identifying the valid field, or the like.

In line with a signaling saving principle, a base station may load Category 1 into a paging message according to a preset threshold. Assume that the preset threshold is 3, if Category 1 contains at least 3 valid fields, then the whole Category 1 may be loaded into the paging message.

If Category 1 contains less than 3 valid fields, as exemplified, only the information on the valid fields, i.e., sequence numbers and field values of the second field and the third field, may be loaded into the paging message. Or, masks for identifying the valid fields, i.e., the second field and the third field, and the field values of the respective valid fields, are loaded into the paging message. Thus, control signaling is saved.

In option 23, the paging message is sent to the UE.

Having determined a paging message for paging a target UE, a base station may broadcast the paging message to a target cell. Since the paging message includes a correspondence between the equipment identifier of UE1 and a category, UE1 may receive the paging message according to the equipment identifier and determine the category of access.

In option 24, access control information of a target cell is broadcast to the UE, to allow the UE to match the access control information to the category and determine whether the UE is allowed to access the target cell.

Corresponding to option 12, in the subject disclosure, a base station may broadcast to a target cell, access control information of the cell, to allow UE which is to access the cell to detect access restriction. The access control information may include an access control parameter configured for a category.

A base station may broadcast the access control configuration in at least one of ways as follows.

In a first way, a base station may broadcast one or more specific numerical values of the categories, such as 1, 2, 3, etc.

In a second way, a base station may broadcast one or more ranges of values of the categories. In broadcasting a range of values, only two endpoint values such as 5 and 8, may be broadcast, meaning an access range [5, 8] of a category.

In a third way, a base station may broadcast a range of values of the categories and a corresponding exclusive list, such as [1, 20] and an exclusive list made up of {2, 5, 8, 9}, indicating that UE with a category of a value falling in [1, 20] is allowed to access a cell, while UE with a category of a value 2, 5, 8, or 9 is restricted from access.

In a fourth way, a base station may broadcast in the target cell a mask value in a preset mask and a corresponding range of values. The mask may have a data structure same as that of the categories. For example, a sequence number "1" of a field as shown in FIG. 3-2 and a corresponding range of values "001" may be broadcast. The range of values may be a specific numerical value.

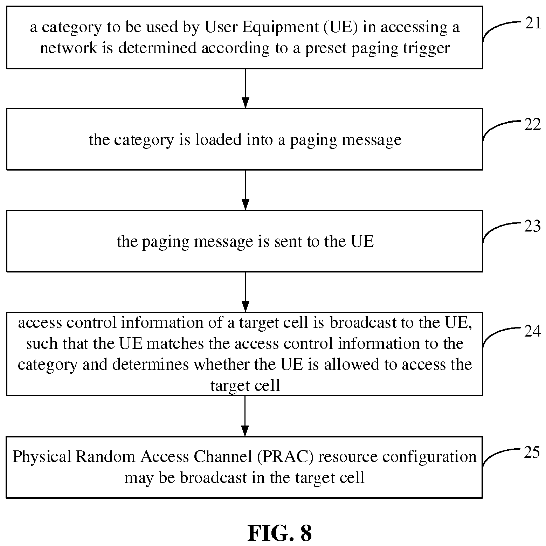

FIG. 8 is a flowchart of a method for controlling network access according to an example herein. Based on the embodiment shown in FIG. 6, the method may further include one or more options as follows.

In option 25, Physical Random Access Channel (PRAC) resource configuration may be broadcast in the target cell. The PRAC resource configuration may include a correspondence between a category and configuration of preamble for random access.

Having received the PRAC resource configuration, UE1 located in the target cell may execute the options 131-133.

The base station may also load configuration of preamble corresponding to Category 1 into the paging message directed at UE1, to allow paged UE such as UE1 to determine information on a resource available for random access while acquiring a category of access.

It can be seen that with a method for controlling network access according to at least one embodiment herein, when being paged to access a network, UE may simultaneously acquire a category of access designated by a base station to match access control information of a cell configured based on a category to effectively determine whether the UE is allowed to access the network of the target cell.

For simplicity, an embodiment herein is formulated as a combination of a series of actions. However, a person having ordinary skill in the art should know that the subject disclosure is not limited to the order of actions described. According to the subject disclosure, some options may be performed simultaneously or in an order other than that described.

A person having ordinary skill in the art should also know that any embodiment described herein is optional. An action or module involved therein may not be required by the subject disclosure.

Corresponding to the embodiments implementing an application function, the subject disclosure also provides embodiments of an apparatus for implementing an application function and embodiments of a corresponding terminal.

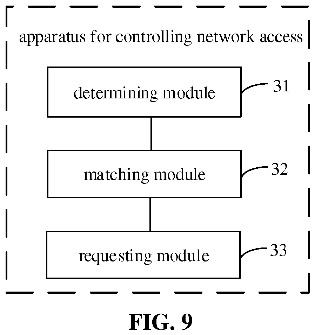

FIG. 9 is a block diagram of an apparatus for controlling network access according to an example herein. The apparatus is arranged in UE. The apparatus may include a module as follows.

A determining module 31 is arranged for: determining a category of access by the UE according to a paging message sent by a base station.

A matching module 32 is arranged for: acquiring a result of matching access control information of a target cell to the category of access by the UE. The access control information may include an access control parameter configured for a category.

A requesting module 33 is arranged for: in response to the result indicating that the UE is allowed to access the target cell, initiating a request for random access to the target cell.

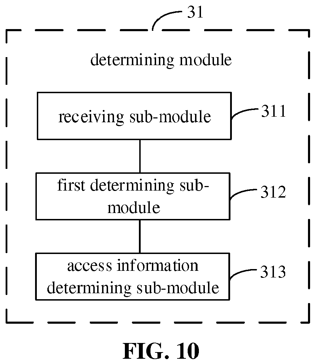

FIG. 10 is a block diagram of an apparatus for controlling network access according to an example herein. Based on the embodiment shown in FIG. 9, the determining module 31 may include a sub-module as follows.

A receiving sub-module 311 may be arranged for: receiving the paging message directed at the UE sent by the base station.

The category contained in the paging message may be expressed as a numerical value of the category.

The category contained in the paging message may be expressed as a sequence number of a valid field in the category and a field value of the valid field.

The category contained in the paging message may be expressed as a mask and a field value of a valid field identified by the mask;
A first determining sub-module 312 may be arranged for: determining whether the paging message contains a category.

An access information determining sub-module 313 may be arranged for: in response to determining that the paging message contains a category, determining the category contained in the paging message as the category of access to be used by the UE in accessing a network.

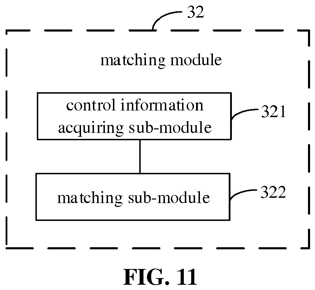

FIG. 11 is a block diagram of an apparatus for controlling network access according to an example herein. Based on the apparatus embodiment shown in FIG. 9, the matching module 32 may include a sub-module as follows.

A control information acquiring sub-module 321 may be arranged for: acquiring an access control parameter configured for a category broadcast by the base station, determining the access control information of the target cell.

A matching sub-module 322 may be arranged for: matching the access control information of the target cell to the category of access by the UE.

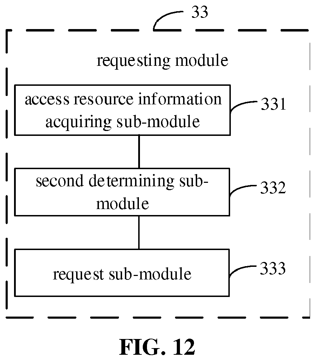

FIG. 12 is a block diagram of an apparatus for controlling network access according to an example herein. Based on the apparatus embodiment shown in FIG. 9, the requesting module 33 may include a sub-module as follows.

An access resource information acquiring sub-module 331 may be arranged for: acquiring Physical Random Access Channel (PRAC) resource configuration broadcast by the base station. The PRAC resource configuration may include a correspondence between a category and configuration of preamble for random access.

A second determining sub-module 332 may be arranged for: determining whether the PRAC resource configuration comprises configuration of target preamble corresponding to the category of access by the UE.

A request sub-module 333 may be arranged for: in response to determining that the PRAC resource configuration comprises the configuration of the target preamble, initiating the request for random access to the target cell using a resource for the target preamble indicated by the configuration of the target preamble.

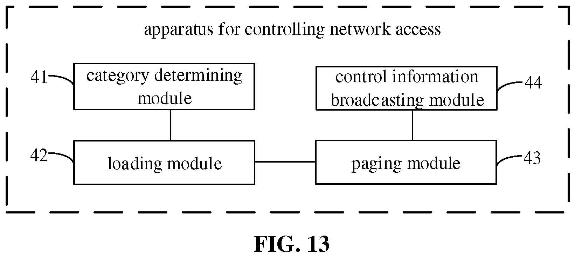

Accordingly, an apparatus for controlling network access is also provided, which is arranged in a base station. FIG. 13 is a block diagram of an apparatus for controlling network access according to an example herein. The apparatus may include a module as follows.

A category determining module 41 may be arranged for: determining, according to a preset paging trigger, a category to be used by User Equipment (UE) in accessing a network;

A loading module 42 (namely a paging information generating module) may be arranged for: loading the category into a paging message;

A paging module 43 may be arranged for: sending the paging message to the UE; and

A control information broadcasting module 44 may be arranged for: broadcasting access control information of a target cell to the UE, such that the UE matches the access control information to the category and determines whether the UE is allowed to access the target cell .

The access control information includes an access control parameter configured for a category.

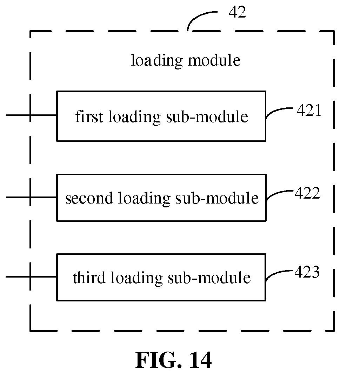

FIG. 14 is a block diagram of an apparatus for controlling network access according to an example herein. Based on the apparatus embodiment shown in FIG. 13, the loading module 42 may include a sub-module as follows.

A first loading sub-module may be arranged for: loading a specific numerical value of the whole category into the paging message.

A second loading sub-module may be arranged for: loading a sequence number of a valid field in the category and a field value of the valid field into the paging message.

A third loading sub-module may be arranged for: loading a mask and a field value of a valid field identified by the mask into the paging message (i.e., loading into the paging message a mask for identifying a valid field and a field value of the valid field identified by the mask).

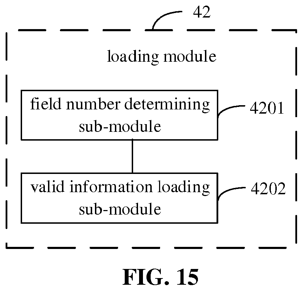

FIG. 15 is a block diagram of an apparatus for controlling network access according to an example herein. Based on the apparatus embodiment shown in FIG. 13, the loading module 42 may include a sub-module as follows.

A field number determining sub-module 4201 may be arranged for: determining a number of valid fields in the category,

A valid information loading sub-module 4202 may be arranged for: in response to determining that the number of the valid fields is less than a preset threshold, loading information on the valid fields into the paging message.

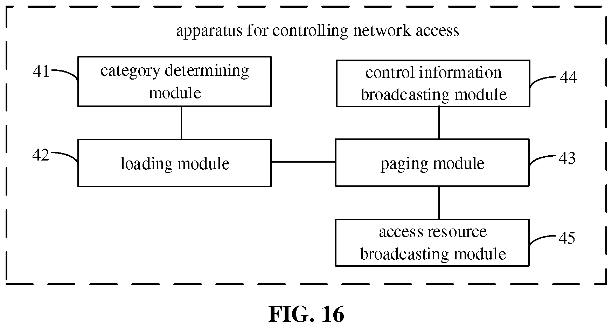

FIG. 16 is a block diagram of an apparatus for controlling network access according to an example herein. Based on the apparatus embodiment shown in FIG. 13, the apparatus may further include a module as follows.

An access resource broadcasting module 45 may be arranged for: broadcasting, in the target cell, Physical Random Access Channel (PRAC) resource configuration. The PRAC resource configuration may include a correspondence between a category and configuration of preamble for random access.

An apparatus embodiment herein basically corresponds to a method embodiment herein, description of which may be referred to for a related part thereof. An apparatus embodiment described herein is but schematic. Units described herein as separate parts may or may not be physically separate. A part displayed as a unit may or may not be a physical unit. That is, it may be located in one place, or distributed over multiple network units. Some or all of the modules herein may be selected as needed to achieve an effect of a solution herein. One of ordinary skill in the art may understand and implement the above without creative effort.

Accordingly, an aspect provides an apparatus for controlling network access.

The apparatus includes a processor and memory.

The memory is arranged for storing instructions executable by the processor.

The processor is arranged for: determining a category of access by User Equipment (UE) according to a paging message sent by a base station; acquiring a result of matching access control information of a target cell to the category of access by the UE; and in response to the result indicating that the UE is allowed to access the target cell, initiating a request for random access to the target cell.

The access control information includes an access control parameter configured for a category.

Another aspect provides an apparatus for controlling network access.

The apparatus includes a processor and memory.

The memory is arranged for storing instructions executable by the processor.

The processor is arranged for: determining, according to a preset paging trigger, a category to be used by User Equipment (UE) in accessing a network; loading the category into a paging message; sending the paging message to the UE; and broadcasting access control information of a target cell to the UE.

Accordingly, the UE is allowed to match the access control information to the category and determine whether the UE is allowed to access the target cell.

The access control information includes an access control parameter configured for a category.

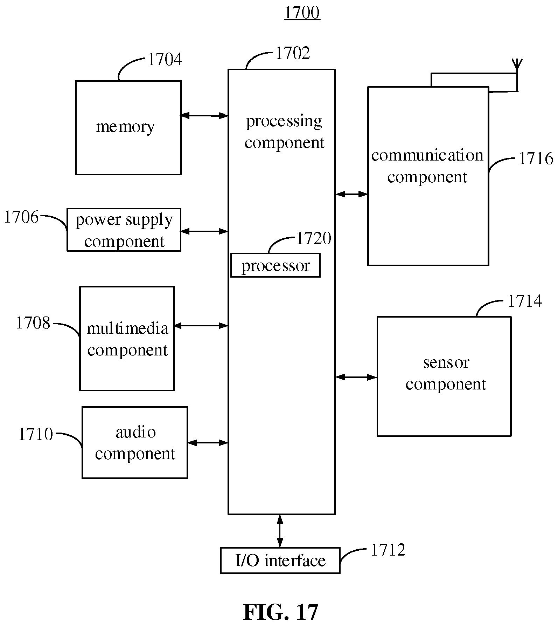

FIG. 17 is a diagram of a structure of an apparatus 1700 for controlling network access according to an example herein. For example, the apparatus 1700 may be UE, and may specifically be a mobile phone, a computer, a digital broadcasting terminal, a message transceiver, a game console, tablet equipment, medical equipment, fitness equipment, a Personal Digital Assistant (PDA), wearable equipment such as a smart watch, smart glasses, a smart wristband, smart sneakers, and/or the like.

Referring to FIG. 17, the apparatus 1700 may include one or more components as follows: a processing component 1702, memory 1704, a power supply component 1706, a multimedia component 1708, an audio component 1710, an Input / Output (I/O) interface 1712, a sensor component 1714, and a communication component 1716.

The processing component 1702 generally may control an overall operation of the apparatus 1700, such as operations associated with display, a telephone call, data communication, a camera operation, a recording operation, etc. The processing component 1702 may include at least one processor 1720 to execute instructions so as to complete all or some options of the method. In addition, the processing component 1702 may include one or more modules to facilitate interaction between the processing component 1702 and other components. For example, the processing component 1702 may include a multimedia module to facilitate interaction between the multimedia component 1708 and the processing component 1702.

The memory 1704 may be arranged for storing various types of data to support operation on equipment 1700. Example of such data may include instructions of any application or method arranged for operating on the apparatus 1700, contact data, phonebook data, messages, pictures, videos, and/or the like. The memory 1704 may be realized by any type of volatile or non-volatile storage equipment or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or compact disk.

The power supply component 1706 may supply electric power to various components of the apparatus 1700. The power supply component 1706 may include a power management system, one or more power supplies, and other components related to generating, managing and distributing electric power for the apparatus 1700.

The multimedia component 1708 may include a screen providing an output interface between the apparatus 1700 and a user. The screen may include a Liquid Crystal Display (LCD) and a Touch Panel (TP). If the screen includes a TP, the screen may be realized as a touch screen to receive an input signal from a user. The TP may include one or more touch sensors for sensing touch, slide and gestures on the TP. The touch sensors not only may sense the boundary of a touch or slide move, but also detect the duration and pressure related to the touch or slide move. The multimedia component 1708 may include a front camera and/or a rear camera. When the equipment 1700 is in an operation mode such as a shooting mode or a video mode, the front camera and/or the rear camera may receive external multimedia data. Each of the front camera and the rear camera may be a fixed optical lens system or may have a focal length and be capable of optical zooming.

The audio component 1710 may be arranged for outputting and/or inputting an audio signal. For example, the audio component 1710 may include a microphone (MIC). When the apparatus 1700 is in an operation mode such as a call mode, a recording mode, and a voice recognition mode, the MIC may be arranged for receiving an external audio signal. The received audio signal may be further stored in the memory 1704 or may be sent via the communication component 1716. The audio component 1710 may further include a loudspeaker arranged for outputting the audio signal.

The I/O interface 1712 may provide an interface between the processing component 1702 and a peripheral interface module. Such a peripheral interface module may be a keypad, a click wheel, a button or the like. Such a button may include but is not limited to: a homepage button, a volume button, a start button, and a lock button.

The sensor component 1714 may include one or more sensors for assessing various states of the apparatus 1700. For example, the sensor component 1714 may detect an on/off state of the equipment 1700 and relative positioning of components such as the display and the keypad of the apparatus 1700. The sensor component 1714 may further detect a change in the position of the apparatus 1700 or of a component of the apparatus 1700, whether there is contact between the apparatus 1700 and a user, the orientation or acceleration/deceleration of the apparatus 1700, and a change in the temperature of the apparatus 1700. The sensor component 1714 may include a proximity sensor arranged for detecting existence of a nearby object without physical contact. The sensor component 1714 may further include an optical sensor such as a Complementary Metal-Oxide-Semiconductor (CMOS) or Charge-Coupled-Device (CCD) image sensor used in an imaging application. The sensor component 1714 may further include an acceleration sensor, a gyroscope sensor, a magnetic sensor, a pressure sensor, or a temperature sensor.

The communication component 1716 may be arranged for facilitating wired or wireless/radio communication between the apparatus 1700 and other equipment. The apparatus 1700 may access a radio network based on a communication standard such as WiFi, 2G, 3G,..., or a combination thereof. The communication component 1716 may receive a broadcast signal or broadcast related information from an external broadcast management system via a broadcast channel. The communication component 1716 may further include a Near Field Communication (NFC) module for short-range communication. For example, the NFC module may be realized based on Radio Frequency Identification (RFID), Infrared Data Association (IrDA), Ultra-WideBand (UWB) technology, BlueTooth (BT) technology, and other technologies.

The apparatus 1700 may be realized by one or more of Application Specific Integrated Circuits (ASIC), Digital Signal Processors (DSP), Digital Signal Processing Device (DSPD), Programmable Logic Devices (PLD), Field Programmable Gate Arrays (FPGA), controllers, microcontrollers, microprocessors or other electronic components, to implement the method.

A non-transitory computer-readable storage medium including instructions, such as memory 1704 including instructions, is provided. The instructions may be executed by the processor 1720 of the apparatus 1700 to implement a method for controlling network access of any one of FIG. 1 to FIG. 5. For example, the non-transitory computer-readable storage medium may be a Read-Only Memory (ROM), a Random Access Memory (RAM), a Compact Disc Read-Only Memory (CD-ROM), a magnetic tape, a floppy disk, optical data storage equipment, etc.

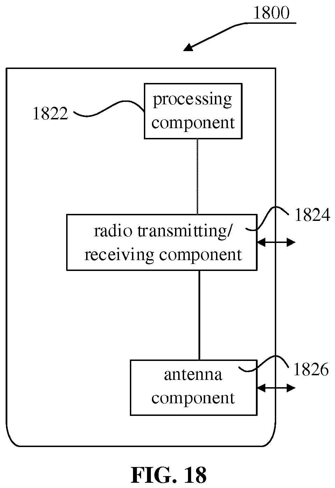

Refer to FIG. 18. FIG. 18 is a diagram of a structure of an apparatus for controlling network access according to an example herein. The apparatus 1800 may be provided as a base station. Referring to FIG. 18, the apparatus 1800 may include a processing component 1822, a radio transmitting/receiving component 1824, an antenna component 1826, and a signal processing part dedicated to a radio interface. The processing component 1822 may further include one or more processors.

One processor in the processing component 1822 may be arranged for: determining, according to a preset paging trigger, a category to be used by User Equipment (UE) in accessing a network; loading the category into a paging message; sending the paging message to the UE; and broadcasting access control information of a target cell to the UE.

Then, the UE is allowed to match the access control information to the category.

And, the UE is allowed to determine whether the UE is allowed to access the target cell.

The access control information includes an access control parameter configured for a category.

A non-transitory computer-readable storage medium including instructions is provided. Said medium has stored thereon computer instructions. Said computer instructions may be executed by the processing component 1822 of the apparatus 1800 to implement a method for controlling network access of any one of FIG. 6 to FIG. 8. For example, the non-transitory computer-readable storage medium may be a Read-Only Memory (ROM), a Random Access Memory (RAM), a Compact Disc Read-Only Memory (CD-ROM), a magnetic tape, a floppy disk, optical data storage equipment, etc.

Other implementations of the subject disclosure will be apparent to a person having ordinary skill in the art that has considered the specification and or practiced the subject disclosure. The scope of protection is defined in the claims.

## Claims

1. A method for controlling network access, the method being performed by User Equipment, UE (1700), **characterized in that** the method comprises:
determining (11), according to a paging message sent by a base station (1800) of a target cell, a category of access by the UE (1700) ;
receiving (24) access control information of the target cell broadcast by the base station (1800) ;
acquiring (12) a result of matching (122) the access control information of the target cell to the category of access by the UE (1700); and
in response to the result indicating that the UE (1700) is allowed to access the target cell, initiating (13) a request for random access to the target cell ,
wherein the access control information of the target cell comprises an access control parameter configured for a category allowed to access the target cell.

2. The method of claim 1, wherein the step of determining a category of access by the UE (1700) according to a paging message sent by a base station (1800) comprises:
receiving (111) the paging message sent by the base station (1800) ;
determining (112) whether the paging message contains a category ; and
in response to determining that the paging message contains a category,
determining (113) the category contained in the paging message as the category of access to be used by the UE (1700) in accessing a network.

3. The method of claim 2, wherein the category contained in the paging message is expressed as any one of:
a numerical value of the category;
a sequence number of a valid field in the category and a field value of the valid field; or
a mask and a field value of a valid field identified by the mask.

4. The method of claim 1, wherein the matching of access control information of a target cell to the category of access by the UE (1700) comprises:
acquiring an access control parameter configured for a category broadcast by the base station (1800),
determining (121) the access control information of the target cell ; and
matching (122) the access control information of the target cell to the category of access by the UE (1700) .

5. The method of claim 1, wherein the step of initiating a request for random access to the target cell comprises:
acquiring (131) Physical Random Access Channel, PRACH, resource configuration broadcast by the base station (1800), the PRACH resource configuration comprising a correspondence between a category and configuration of preamble for random access;
determining (132) whether the PRACH resource configuration comprises configuration of target preamble corresponding to the category of access by the UE (1700), and
in response to determining that the PRACH resource configuration comprises the configuration of the target preamble,
initiating (133) the request for random access to the target cell using a resource for the target preamble indicated by the configuration of the target preamble .

6. A method for controlling network access, the method being performed by a base station (1800) of a target cell, **characterized in that** the method comprises:
determining (21), according to a preset paging trigger, a category to be used by User Equipment, UE (1700), in accessing a network;
loading (22) the category into a paging message;
sending (23) the paging message to the UE (1700); and
broadcasting (24) access control information of the target cell to the UE (1700),
wherein the access control information of the target cell comprises an access control parameter configured for a category allowed to access the target cell.

7. The method of claim 6, wherein loading the category into the paging message comprises any one of:
loading a numerical value of the category into the paging message;
loading a sequence number of a valid field in the category and a field value of the valid field into the paging message; or
loading a mask and a field value of a valid field identified by the mask into the paging message.

8. The method of claim 6, wherein loading the category into the paging message comprises:
determining (221) a number of valid fields in the category; and
in response to determining that the number of the valid fields is less than a preset threshold,
loading (222) information on the valid fields into the paging message .

9. The method of claim 6, further comprising:
broadcasting (25), in the target cell, Physical Random Access Channel, PRACH, resource configuration (25) comprising a correspondence between a category and configuration of preamble for random access.

10. User Equipment, UE (1700), comprising:
a processor (1720); and
memory (1704) arranged for storing instructions executable by the processor (1720),
**characterized in that** the processor (1720) is arranged for:
determining, according to a paging message sent by a base station (1800) of a target cell, a category of access by the UE (1700);
receiving access control information of the target cell broadcast by the base station (1800);
acquiring a result of matching the access control information of the target cell to the category of access by the UE (1700), and
in response to the result indicating that the UE (1700) is allowed to access the target cell,
initiating a request for random access to the target cell,
wherein the access control information of the target cell comprises an access control parameter configured for a category allowed to access the target cell.

11. The UE (1700) of claim 10, wherein the processor (1720) is arranged for determining the category of access by the UE (1700) according to the paging message sent by the base station (1800) by:
receiving the paging message sent by the base station (1800);
determining whether the paging message contains a category; and
in response to determining that the paging message contains a category,
determining the category contained in the paging message as the category of access to be used by the UE (1700) in accessing a network.

12. The UE (1700) of claim 11, wherein the category contained in the paging message is expressed as any one of:
a numerical value of the category;
a sequence number of a valid field in the category and a field value of the valid field; or
a mask and a field value of a valid field identified by the mask.

13. The UE (1700) of claim 10, wherein the processor (1720) is arranged for matching the access control information of the target cell to the category of access by the UE (1700) by:
acquiring an access control parameter configured for a category broadcast by the base station (1800), determining the access control information of the target cell; and
matching the access control information of the target cell to the category of access by the UE (1700).

14. The UE (1700) of claim 10, wherein the processor (1720) is arranged for initiating the request for random access to the target cell by:
acquiring Physical Random Access Channel, PRACH, resource configuration broadcast by the base station (1800), the PRACH resource configuration comprising a correspondence between a category and configuration of preamble for random access;
determining whether the PRACH resource configuration comprises configuration of target preamble corresponding to the category of access by the UE (1700);
in response to determining that the PRACH resource configuration comprises the configuration of the target preamble,
initiating the request for random access to the target cell using a resource for the target preamble indicated by the configuration of the target preamble.

15. A base station (1800) of a target cell, comprising:
a processor (1822);
memory arranged for storing instructions executable by the processor (1822),
**characterized in that** the processor (1822) is arranged for:
determining, according to a preset paging trigger, a category to be used by User Equipment, UE (1700), in accessing a network;
loading the category into a paging message;
sending the paging message to the UE (1700); and
broadcasting access control information of the target cell to the UE (1700),
wherein the access control information of the target cell comprises an access control parameter configured for a category allowed to access the target cell.

## Patentansprüche

1. Ein Verfahren zum Steuern von Netzwerkzugriff, wobei das Verfahren von Anwenderausrüstung, UE (1700), durchgeführt wird, **dadurch gekennzeichnet, dass** das Verfahren umfasst:
Bestimmen (11) gemäß einer Funkrufnachricht, die von einer Basisstation (1800) einer Zielzelle gesendet wird, einer Kategorie von Zugriff durch die UE (1700);
Empfangen (24) von Zugriffssteuerungsinformationen der Zielzellenaussendung durch die Basisstation (1800);
Beschaffen (12) eines Ergebnisses vom Abgleich (122) der Zugriffssteuerungsinformationen der Zielzelle mit der Kategorie von Zugriff durch die UE (1700); und
in Antwort auf das Ergebnis, das anzeigt, dass der UE (1700) gestattet ist, auf die Zielzelle zuzugreifen, Einleiten (13) einer Anfrage für Direktzugriff auf die Zielzelle,
wobei die Zugriffssteuerungsinformationen der Zielzelle einen Zugriffssteuerungsparameter umfassen, der für eine Kategorie konfiguriert ist, der gestattet ist, auf die Zielzelle zuzugreifen.

2. Das Verfahren nach Anspruch 1, wobei der Schritt zum Bestimmen einer Kategorie von Zugriff durch die UE (1700) gemäß einer Funkrufnachricht, die von einer Basisstation (1800) gesendet wird, umfasst:
Empfangen (111) der Funkrufnachricht, die von der Basisstation (1800) gesendet wird;
Bestimmen (112), ob die Funkrufnachricht eine Kategorie enthält; und
in Antwort auf Bestimmen, dass die Funkrufnachricht eine Kategorie enthält, Bestimmen (113) der Kategorie, die in der Funkrufnachricht enthalten ist, als die Zugriffskategorie, die von der UE (1700) beim Zugriff auf ein Netzwerk zu verwenden ist.

3. Das Verfahren nach Anspruch 2, wobei die Kategorie, die in der Funkrufnachricht enthalten ist, als eines ausgedrückt wird von:
einem numerischen Wert der Kategorie;
einer Laufnummer eines gültigen Felds in der Kategorie und einem Feldwert des gültigen Felds; oder
einer Maske und einem Feldwert eines gültigen Felds, das von der Maske identifiziert wird.

4. Das Verfahren nach Anspruch 1, wobei das Abgleichen der Zugriffssteuerungsinformationen einer Zielzelle mit der Zugriffskategorie durch die UE (1700) umfasst:
Beschaffen eines Zugriffssteuerungsparameters, der für eine Kategorieaussendung durch die Basisstation (1800) konfiguriert ist,
Bestimmen (121) der Zugriffssteuerungsinformationen der Zielzelle; und
Abgleichen (122) der Zugriffssteuerungsinformationen der Zielzelle mit der Zugriffskategorie durch die UE (1700).

5. Das Verfahren nach Anspruch 1, wobei der Schritt zum Einleiten einer Anfrage für Direktzugriff an die Zielzelle umfasst:
Beschaffen (131) von physischer Direktzugriffskanal-, PRACH, Ressourcenkonfigurationsaussendung durch die Basisstation (1800), wobei die PRACH-Ressourcenkonfiguration eine Übereinstimmung zwischen einer Kategorie und Konfiguration von Präambel für Direktzugriff umfasst;
Bestimmen (132), ob die PRACH-Ressourcenkonfiguration Konfiguration von Zielpräambel entsprechend der Zugriffskategorie durch die UE (1700) umfasst, und
in Antwort auf Bestimmen, dass die PRACH-Ressourcenkonfiguration die Konfiguration der Zielpräambel umfasst, Einleiten (133) der Anfrage für Direktzugriff auf die Zielzelle unter Verwendung einer Ressource für die Zielpräambel, die von der Konfiguration der Zielpräambel angezeigt wird.

6. Ein Verfahren zum Steuern von Netzwerkzugriff, wobei das Verfahren von einer Basisstation (1800) einer Zielzelle durchgeführt wird, **dadurch gekennzeichnet, dass** das Verfahren umfasst:
Bestimmen (21), gemäß einem voreingestellten Funkrufauslöser, einer Kategorie, die von Anwenderausrüstung, UE (1700), beim Zugriff auf ein Netzwerk zu verwenden ist;
Laden (22) der Kategorie in eine Funkrufnachricht;
Senden (23) der Funkrufnachricht an die UE (1700); und
Aussenden (24) von Zugriffssteuerungsinformationen der Zielzelle an die UE (1700),
wobei die Zugriffssteuerungsinformationen der Zielzelle einen Zugriffssteuerungsparameter umfassen, der für eine Kategorie konfiguriert ist, der gestattet ist, auf die Zielzelle zuzugreifen.

7. Das Verfahren nach Anspruch 6, wobei Laden der Kategorie in die Funkrufnachricht ein beliebiges umfasst von:
Laden eines numerischen Werts der Kategorie in die Funkrufnachricht;
Laden einer Laufnummer eines gültigen Felds in die Kategorie und eines Feldwerts des gültigen Felds in die Funkrufnachricht; oder
Laden einer Maske und eines Feldwerts eines gültigen Felds, das von der Maske identifiziert wird, in die Funkrufnachricht.

8. Das Verfahren nach Anspruch 6, wobei Laden der Kategorie in die Funkrufnachricht umfasst:
Bestimmen (221) einer Zahl von gültigen Felder in der Kategorie; und
in Antwort auf Bestimmen, dass die Zahl der gültigen Felder geringer als eine voreingestellte Schwelle ist,
Laden (222) von Informationen über die gültigen Felder in die Funkrufnachricht.

9. Das Verfahren nach Anspruch 6, weiter umfassend:
Aussenden (25), in der Zielzelle, von physischer Direktzugriffkanal-, PRACH, Ressourcenkonfiguration, die eine Übereinstimmung zwischen einer Kategorie und Konfiguration von Präambel für Direktzugriff umfasst.

10. Eine Anwenderausrüstung, UE (1700), umfassend:
einen Prozessor (1720); und
Speicher (1704), der zum Speichern von Anweisungen eingerichtet ist, die von dem Prozessor (1720) ausführbar sind;
**dadurch gekennzeichnet, dass** der Prozessor (1720) eingerichtet ist zum:
Bestimmen, gemäß einer Funkrufnachricht, die von einer Basisstation (1800) einer Zielzelle gesendet wird, einer Zugriffskategorie durch die UE (1700);
Empfangen von Zugriffssteuerungsinformationen der Zielzellenaussendung durch die Basisstation (1800);
Beschaffen eines Ergebnisses von Abgleich der Zugriffssteuerungsinformationen der Zielzelle mit der Zugriffskategorie durch die UE (1700), und
in Antwort auf das Ergebnis, das anzeigt, dass der UE (1700) gestattet ist, auf die Zielzelle zuzugreifen,
Einleiten einer Anfrage für Direktzugriff auf die Zielzelle,
wobei die Zugriffssteuerungsinformationen der Zielzelle einen Zugriffssteuerungsparameter umfassen, der für eine Kategorie konfiguriert ist, der gestattet wird, auf die Zielzelle zuzugreifen.

11. Die UE (1700) nach Anspruch 10, wobei der Prozessor (1720) eingerichtet ist, die Zugriffskategorie durch die UE (1700) gemäß der Funkrufnachricht, die von der Basisstation (1800) gesendet wird, zu bestimmen durch:
Empfangen der Funkrufnachricht, die von der Basisstation (1800) gesendet wird;
Bestimmen, ob die Funkrufnachricht eine Kategorie enthält; und
in Antwort auf Bestimmen, dass die Funkrufnachricht eine Kategorie enthält,
Bestimmen der Kategorie, die in der Funkrufnachricht enthalten ist, als die Zugriffskategorie, die von der UE (1700) beim Zugriff auf ein Netzwerk zu verwenden ist.

12. Die UE (1700) nach Anspruch 11, wobei die Kategorie, die in der Funkrufnachricht enthalten ist, als ein beliebiges ausgedrückt wird von:
einem numerischen Wert der Kategorie;
einer Laufnummer eines gültigen Felds in der Kategorie und einem Feldwert des gültigen Felds; oder
einer Maske und einem Feldwert eines gültigen Felds, das von der Maske identifiziert wird.

13. Die UE (1700) nach Anspruch 10, wobei der Prozessor (1720) zum Abgleich der Zugriffssteuerungsinformationen der Zielzelle mit der Zugriffskategorie durch die UE (1700) eingerichtet wird durch:
Beschaffen eines Zugriffssteuerungsparameters, der für eine Kategorieaussendung durch die Basisstation (1800) konfiguriert ist, Bestimmen der Zugriffssteuerungsinformationen der Zielzelle; und
Abgleichen der Zugriffssteuerungsinformationen der Zielzelle mit der Zugriffskategorie durch die UE (1700).

14. Die UE (1700) nach Anspruch 10, wobei der Prozessor (1720) zum Einleiten der Anfrage für Direktzugriff auf die Zielzelle eingerichtet wird durch:
Beschaffen von physischer Direktzugriffskanal-, PRACH, Ressourcenkonfigurationsaussendung durch die Basisstation (1800), wobei die PRACH-Ressourcenkonfiguration eine Übereinstimmung zwischen einer Kategorie und Konfiguration von Präambel für Direktzugriff umfasst;
Bestimmen, ob die PRACH-Ressourcenkonfiguration Konfiguration von Zielpräambel entsprechend der Zugriffskategorie durch die UE (1700) umfasst;
in Antwort auf Bestimmen, dass die PRACH-Ressourcenkonfiguration die Konfiguration der Zielpräambel umfasst,
Einleiten der Anfrage für Direktzugriff auf die Zielzelle unter Verwendung einer Ressource für die Zielpräambel, die von der Konfiguration der Zielpräambel angezeigt wird.

15. Eine Basisstation (1800) einer Zielzelle, umfassend:
einen Prozessor (1822);
Speicher, der zum Speichern von Anweisungen eingerichtet ist, die von dem Prozessor (1822) ausführbar sind,
**dadurch gekennzeichnet, dass** der Prozessor (1822) eingerichtet ist zum:
Bestimmen, gemäß einem voreingestellten Funkrufauslöser, einer Kategorie, die von Anwenderausrüstung, UE (1700), beim Zugriff auf ein Netzwerk zu verwenden ist;
Laden der Kategorie in eine Funkrufnachricht;
Senden der Funkrufnachricht an die UE (1700); und
Aussenden von Zugriffssteuerungsinformationen der Zielzelle an die UE (1700),
wobei die Zugriffssteuerungsinformationen der Zielzelle einen Zugriffssteuerungsparameter umfassen, der für eine Kategorie konfiguriert ist, der gestattet wird, auf die Zielzelle zuzugreifen.

## Revendications

1. Un procédé pour commander un accès au réseau, le procédé étant exécuté par un équipement utilisateur, UE, (1700), **caractérisé en ce que** le procédé comprend :
déterminer (11), en fonction d'un message de radiomessagerie envoyé par une station de base (1800) d'une cellule cible, une catégorie d'accès par l'UE (1700) ;
recevoir (24) des informations de commande d'accès de la cellule cible diffusées par la station de base (1800) ;
acquérir (12) un résultat de mise en correspondance (122) des informations de commande d'accès de la cellule cible avec la catégorie d'accès par l'UE (1700) ; et
en réponse au résultat indiquant que l'UE (1700) est autorisé à accéder à la cellule cible, lancer (13) une demande d'accès aléatoire à la cellule cible,
dans lequel les informations de commande d'accès de la cellule cible comprennent un paramètre de commande d'accès configuré pour une catégorie autorisée à accéder à la cellule cible.

2. Le procédé selon la revendication 1, dans lequel l'étape de détermination d'une catégorie d'accès par l'UE (1700) en fonction d'un message de radiomessagerie envoyé par une station de base (1800) comprend :
recevoir (111) le message de radiomessagerie envoyé par la station de base (1800) ;
déterminer (112) si le message de radiomessagerie contient une catégorie ou non ; et
en réponse à la détermination que le message de radiomessagerie contient une catégorie, déterminer (113) la catégorie contenue dans le message de radiomessagerie en tant que catégorie d'accès à utiliser par l'UE (1700) dans un accès à un réseau.

3. Le procédé selon la revendication 2, dans lequel la catégorie contenue dans le message de radiomessagerie est exprimée comme un quelconque parmi :
une valeur numérique de la catégorie ;
un numéro de séquence d'un champ valide dans la catégorie et une valeur de champ du champ valide ; ou
un masque et une valeur de champ d'un champ valide identifié par le masque.

4. Le procédé selon la revendication 1, dans lequel la mise en correspondance d'informations de commande d'accès d'une cellule cible avec la catégorie d'accès par l'UE (1700) comprend :
acquérir un paramètre de commande d'accès configuré pour une catégorie diffusée par la station de base (1800),
déterminer (121) les informations de commande d'accès de la cellule cible ; et
mettre en correspondance (122) les informations de commande d'accès de la cellule cible avec la catégorie d'accès par l'UE (1700).

5. Le procédé selon la revendication 1, dans lequel l'étape de lancer une demande d'accès aléatoire à la cellule cible comprend :
acquérir (131) une configuration de ressource de canal d'accès aléatoire physique, PRACH, diffusée par la station de base (1800), la configuration de ressource de PRACH comprenant une correspondance entre une catégorie et une configuration de préambule pour un accès aléatoire ;
déterminer (132) si la configuration de ressource de PRACH comprend ou non une configuration de préambule cible correspondant à la catégorie d'accès par l'UE (1700), et
en réponse à la détermination que la configuration de ressource de PRACH comprend la configuration du préambule cible, lancer (133) la demande d'accès aléatoire à la cellule cible en utilisant une ressource pour le préambule cible indiquée par la configuration du préambule cible.

6. Un procédé pour commander un accès au réseau, le procédé étant exécuté par une station de base (1800) d'une cellule cible, **caractérisé en ce que** le procédé comprend :
déterminer (21), en fonction d'un déclencheur de radiomessagerie préréglé, une catégorie à utiliser par l'intermédiaire d'un équipement utilisateur, UE (1700), dans un accès à un réseau ;
charger (22) la catégorie dans un message de radiomessagerie ;
envoyer (23) le message de radiomessagerie à l'UE (1700) ; et
diffuser (24) des informations de commande d'accès de la cellule cible vers l'UE (1700),
dans lequel les informations de commande d'accès de la cellule cible comprennent un paramètre de commande d'accès configuré pour une catégorie autorisée à accéder à la cellule cible.

7. Le procédé selon la revendication 6, dans lequel le chargement de la catégorie dans le message de radiomessagerie comprend un quelconque parmi :
un chargement d'une valeur numérique de la catégorie dans le message de radiomessagerie ;
un chargement d'un numéro de séquence d'un champ valide dans la catégorie et d'une valeur de champ du champ valide dans le message de radiomessagerie ; ou
un chargement d'un masque et d'une valeur de champ d'un champ valide identifié par le masque dans le message de radiomessagerie.

8. Le procédé selon la revendication 6, dans lequel le chargement de la catégorie dans le message de radiomessagerie comprend :
déterminer (221) un nombre de champs valides dans la catégorie ; et
en réponse à la détermination que le nombre de champs valides est inférieur à un seuil préréglé, charger (222) des informations sur les champs valides dans le message de radiomessagerie.

9. Le procédé selon la revendication 6, comprenant en outre :
diffuser (25) dans la cellule cible une configuration de ressource de canal d'accès aléatoire physique, PRACH, comprenant une correspondance entre une catégorie et une configuration de préambule pour un accès aléatoire.

10. Un équipement utilisateur, UE (1700), comprenant :
un processeur (1720) ; et
une mémoire (1704) agencée pour stocker des instructions exécutables par le processeur (1720),
**caractérisé en ce que** le processeur (1720) est agencé pour :
déterminer, en fonction d'un message de radiomessagerie envoyé par une station de base (1800) d'une cellule cible, une catégorie d'accès par l'UE (1700) ;
recevoir des informations de commande d'accès de la cellule cible diffusées par la station de base (1800) ;
acquérir un résultat de mise en correspondance des informations de commande d'accès de la cellule cible avec la catégorie d'accès par l'UE (1700), et
en réponse au résultat indiquant que l'UE (1700) est autorisé à accéder à la cellule cible,
lancer une demande d'accès aléatoire à la cellule cible,
dans lequel les informations de commande d'accès de la cellule cible comprennent un paramètre de commande d'accès configuré pour une catégorie autorisée à accéder à la cellule cible.

11. L'UE (1700) selon la revendication 10, dans lequel le processeur (1720) est agencé pour déterminer la catégorie d'accès par l'UE (1700) en fonction du message de radiomessagerie envoyé par la station de base (1800) par :
recevoir le message de radiomessagerie envoyé par la station de base (1800) ;
déterminer si le message de radiomessagerie contient une catégorie ou non ; et
en réponse à la détermination que le message de radiomessagerie contient une catégorie,
déterminer la catégorie contenue dans le message de radiomessagerie en tant que catégorie d'accès à utiliser par l'UE (1700) dans un accès à un réseau.

12. L'UE (1700) selon la revendication 11, dans lequel la catégorie contenue dans le message de radiomessagerie est exprimée comme un quelconque parmi :
une valeur numérique de la catégorie ;
un numéro de séquence d'un champ valide dans la catégorie et une valeur de champ du champ valide ; ou
un masque et une valeur de champ d'un champ valide identifié par le masque.

13. L'UE (1700) selon la revendication 10, dans lequel le processeur (1720) est agencé pour mettre en correspondance les informations de commande d'accès de la cellule cible avec la catégorie d'accès par l'UE (1700) par :
acquérir un paramètre de commande d'accès configuré pour une catégorie diffusée par la station de base (1800), déterminer les informations de commande d'accès de la cellule cible ; et
mettre en correspondance les informations de commande d'accès de la cellule cible avec la catégorie d'accès par l'UE (1700).

14. L'UE (1700) selon la revendication 10, dans lequel le processeur (1720) est agencé pour lancer la demande d'accès aléatoire à la cellule cible par :
acquérir une configuration de ressource de canal d'accès aléatoire physique, PRACH, diffusée par la station de base (1800), la configuration de ressource de PRACH comprenant une correspondance entre une catégorie et une configuration de préambule pour un accès aléatoire ;
déterminer si la configuration de ressource de PRACH comprend ou non une configuration de préambule cible correspondant à la catégorie d'accès par l'UE (1700) ;
en réponse à la détermination que la configuration de ressource de PRACH comprend la configuration du préambule cible,
lancer la demande d'accès aléatoire à la cellule cible en utilisant une ressource pour le préambule cible indiquée par la configuration du préambule cible.

15. Une station de base (1800) d'une cellule cible, comprenant :
un processeur (1822) ;
une mémoire agencée pour stocker des instructions exécutables par le processeur (1822),
**caractérisé en ce que** le processeur (1822) est agencé pour :
déterminer, en fonction d'un déclencheur de radiomessagerie préréglé, une catégorie à utiliser par l'équipement utilisateur, UE (1700), dans un accès à un réseau ;
charger la catégorie dans un message de radiomessagerie ;
envoyer le message de radiomessagerie à l'UE (1700) ; et
diffuser des informations de commande d'accès de la cellule cible vers l'UE (1700),
dans lequel les informations de commande d'accès de la cellule cible comprennent un paramètre de commande d'accès configuré pour une catégorie autorisée à accéder à la cellule cible.
